# EUROPEAN PATENT APPLICATION

(11) **EP 4 775 546 A1**
(43) Date of publication of application: **15.07.2026**
(21) Application number: 25227326.3
(22) Date of filing: 28.12.2025
(51) Int. Cl.: C01G 53/504, C01G 53/506, H01M 4/525, H01M 10/0525

(54) **CATHODE ACTIVE MATERIAL FOR SECONDARY BATTERY, CATHODE FOR SECONDARY BATTERY AND LITHIUM SECONDARY BATTERY**

(30) Priority: 26.12.2024 KR 20240197179
(71) Applicant: SK On Co., Ltd., Seoul 03161 (KR)
(72) Inventor: LEE, Yoon Ji, 34124 Daejeon (KR); NOH, Mi Jung, 34124 Daejeon (KR); PARK, Hye Jin, 34124 Daejeon (KR); KIM, Hong Ki, 34124 Daejeon (KR)
(74) Representative: Stolmár & Partner Patentanwälte PartG mbB

(57) **Abstract**

A cathode active material for a secondary battery includes a lithium metal oxide particle which contains nickel and cobalt and has a single particle structure. A content of cobalt increases in a direction from a particle center to a particle surface in at least a portion of a region between the particle center and the particle surface. The content of cobalt is in a range from 3 mol% to 20 mol%, and a content of nickel is in a range from 60 mol% to 90 mol% among elements of the lithium metal oxide particle excluding lithium and oxygen.

## Description

### TECHNICAL FIELD

The present disclosure relates to a cathode active material for a secondary battery, a cathode for a secondary battery and a lithium secondary battery.

### BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as an electric vehicle, a hybrid vehicle, etc.

Examples of the secondary battery include a lithium secondary battery, a sodium secondary battery, a potassium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

For example, the lithium secondary battery may include an electrode assembly including a cathode, an anode, and a separation layer (separator), and an electrolyte solution impregnating the electrode assembly. The lithium secondary battery may further include an outer packaging material, e.g., a pouch-shaped packaging material, that accommodates the electrode assembly and the electrolyte solution.

The cathode may include a lithium-nickel metal oxide as a cathode active material. A crystal structure or a chemical structure of the cathode active material may be modified according to repeated charging and discharging of the lithium secondary battery, and capacity and life-span properties of the lithium secondary battery may be degraded.

### SUMMARY

According to an aspect of the present disclosure, there is provided a cathode active material for a secondary battery having improved electrochemical properties.

According to an aspect of the present disclosure, there is provided a cathode for a secondary battery including the cathode active material for a secondary battery.

According to an aspect of the present disclosure, there is provided a lithium secondary battery including the cathode for a secondary battery.

According to embodiments of the present disclosure, a cathode active material for a secondary battery includes a lithium metal oxide particle which contains nickel and cobalt and has a single particle structure. A content of cobalt increases in a direction from a particle center to a particle surface in at least a portion of a region between the particle center and the particle surface. The content of cobalt is in a range from 3 mol% to 20 mol%, and a content of nickel is in a range from 60 mol% to 90 mol% among elements of the lithium metal oxide particle excluding lithium and oxygen.

In some embodiments, the content of nickel among elements of the lithium metal oxide particle excluding lithium and oxygen may be in a range from 60 mol% to 80 mol%.

In some embodiments, the content of cobalt among elements of the lithium metal oxide particle excluding lithium and oxygen at the particle surface may be in a range from 10 mol% to 25 mol%.

In some embodiments, the lithium metal oxide particle may include a core region including the particle center, and a concentration gradient region located between a surface of the core region and the particle surface. The content of cobalt may increase in a direction from the surface of the core region to the particle surface in the concentration gradient region.

In some embodiments, the content of cobalt in the core region may not have a gradient in the direction from the particle center to the particle surface.

In some embodiments, a thickness of the concentration gradient region may be in a range from 10% to 50% of a particle radius.

In some embodiments, the content of nickel in the concentration gradient region may decrease in the direction from the particle center to the particle surface.

In some embodiments, the content of nickel among elements of the lithium metal oxide particle excluding lithium and oxygen at the particle surface may be in a range from 50 mol% to 85 mol%.

In some embodiments, an average particle diameter of the lithium metal oxide particle may be in a range from 1 µm to 5 µm.

In some embodiments, an average value of particle diameters along a major axis may be 1 µm or greater in a cross-sectional image crystal orientation analysis of the lithium metal oxide particle obtained by a focused ion beam (FIB).

A cathode for a lithium secondary battery includes a cathode current collector, and a cathode active material layer on a surface of the cathode current collector. The cathode active material layer includes the above-described cathode active material for a secondary battery.

A lithium secondary battery includes the cathode for a secondary battery and an anode opposing the cathode.

In some embodiments, a driving voltage of the lithium secondary battery may be in a range from 2.5 V to 4.5 V.

In a cathode active material for a secondary battery according to embodiments of the present disclosure, a composition at a surface portion of a particle where lithium enters and a composition of a central portion of the particle may be different from each other. Accordingly, a lithium migration rate may be increased, and a high-voltage and/or high-power battery may be implemented from the cathode active material.

The cathode active material may have improved stability, and a battery having improved life-span and storage properties may be implemented even in a high-temperature environment.

A cathode for a secondary battery and a lithium secondary battery according to embodiments of the present disclosure may have improved power, life-span and storage properties.

The lithium secondary battery according to the present disclosure may be widely applied in green technology fields such as an electric vehicle, a battery charging station, a solar power generation, a wind power generation, etc., using a battery, etc. The lithium secondary battery according to the present disclosure may be used for eco-friendly electric vehicles, hybrid vehicles, or the like, to prevent a climate change by suppressing air pollution and greenhouse gas emissions. etc.

### BRIEF DESCRIPTION OF THE DRAWINGS

FIGS. 1 and 2 are a schematic plan view and a cross-sectional view, respectively, illustrating a lithium secondary battery in accordance with example embodiments.
FIG. 3 is a graph of a cobalt content according to an etched ratio of lithium metal oxide particles of Examples and Comparative Examples.
FIG. 4 is an FIB image of a cross-section of a lithium metal oxide particle of Example 1.
FIG. 5 is an EDS element mapping image of a cobalt element in a cross-section of a lithium metal oxide particle of Example 1.

### DETAILED DESCRIPTION OF THE EMBODIMENTS

The present disclosure provides a cathode active material for a secondary battery including nickel and cobalt. Additionally, the present disclosure provides a cathode for a secondary battery including the cathode active material for a secondary battery and a lithium secondary battery including the cathode.

The term "average particle diameter (D50)" used herein may be an average particle diameter of a plurality of particles, and may be a particle diameter at a point corresponding to 50% in a volume cumulative distribution of active material particles.

A method of measuring the volume cumulative distribution of the particles is not particularly limited, and may be measured using a laser diffraction particle size analyzer, e.g., Malvern 3000.

A cathode active material for a secondary battery according to the present disclosure includes a lithium metal oxide (or a lithium metal oxide particle) including nickel and cobalt. The lithium metal oxide may further include at least one of manganese (Mn) and aluminum (Al) in addition to nickel and cobalt.

In example embodiments, a content of cobalt of the lithium metal oxide excluding lithium and oxygen ranges from 3 mol% to 20 mol%. In some embodiments, the content of cobalt of the lithium metal oxide excluding lithium and oxygen may range from 10 mol% to 18 mol%.

In the above range, a cathode having high power properties may be provided without degrading a capacity of the cathode.

For example, if the content of cobalt exceeds 20 mol%, a content of nickel may become relatively low and the capacity of the cathode may be lowered. For example, if the content of cobalt is less than 3 mol%, a lithium ion conductivity of the lithium metal oxide particle may be decreased and high-rate properties of the battery may be degraded.

According to embodiments, the content of nickel of the lithium metal oxide excluding lithium and oxygen ranges from 60 mol% to 90 mol%. In some embodiments, the content of nickel of the lithium metal oxide excluding lithium and oxygen may be in a range from 60 mol% to 80 mol%, or from 61 mol% to 80 mol%.

In the above range, the cathode having improved stability may be provided without reducing the capacity of the cathode.

For example, if the content of nickel exceeds 90 mol%, stability of a crystal structure of the lithium metal oxide particle may be deteriorated due to repeated battery charge/discharge cycles to reduce battery life-span properties.

For example, if the content of nickel is less than 60 mol%, the capacity of the cathode may be excessively decreased to reduce energy efficiency of the battery.

Unless otherwise defined, the term "content" herein may refer to a molar ratio or a mole fraction among the total number of moles of metals contained in the particle as a bulk composition or an average composition measured over an entire area of the lithium metal oxide particle.

In example embodiments, the lithium metal oxide may include a layered structure or crystal structure represented by Chemical Formula 1 below.

[Chemical Formula 1] LiₓNiₐCo_{b}M_{c}O_{2+z}

In Chemical Formula 1, 0.9≤x≤1.2, 0.6≤a≤0.9, 0.03≤b≤0.2, 0≤c≤0.4, and -0.5≤z≤0.1. As described above, M may include Mn and/or Al.

The chemical structure represented by Chemical Formula 1 represents a bonding relationship in the layered structure or the crystal structure of the cathode active material, and does not exclude an additional element. For example, M includes Mn, and Mn may serve as a main active element of the cathode active material together with Ni and Co. Chemical Formula 1 is provided to express the bonding relationship of the main active element, and is to be understood as encompassing an introduction and a substitution of the additional element.

In an embodiment, an auxiliary element may be further included in addition to the main active element to enhance chemical stability of the cathode active material or the layered structure/crystal structure. The auxiliary element may be incorporated into the layered/crystal structure to form a bond, and this case is to be understood as being included in the chemical structure represented by Chemical Formula 1.

The auxiliary element may include, e.g., at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may also function as an auxiliary active element that may contribute to the capacity/output activity of the cathode active material, such as Al, together with Co or Mn.

The lithium metal oxide may further include a coating element or doping element. For example, elements substantially the same as or similar to the above-described auxiliary elements may be used as the coating element or doping element. For example, the above-described elements may be used alone or in a combination of two or more thereof as the coating element or doping element.

The coating element or doping element may be present on a surface of the lithium metal oxide particle, or may penetrate through the surface of the lithium metal oxide particle to be included in the bonding structure represented by Chemical Formula 1.

The lithium metal oxide particle has a single particle structure. The term "single particle structure" herein is used to exclude, e.g., a secondary particle in which a plurality of primary particles (e.g., more than 10) are aggregated or agglomerated substantially into a single particle.

For example, the lithium metal oxide particles may substantially consist of particle of the single-particle structure, and a secondary particle structure formed by aggregation or agglomeration of the primary particles may be excluded. Further, the term "single particle structure" as used herein does not exclude a monolithic structure in which, e.g., 2 to 10 single particles are attached or adhered to each other.

The single particle structure may also include a structure in which multiple primary particles are integrated and converted into a substantially single particle.

For example, the lithium metal oxide particle may have a single particle structure having 10 or fewer crystallites.

For example, the lithium metal oxide particle may have a single crystal structure. The single crystal structure may refer to a structure in which one particle consist of a single crystallite. For example, the single crystal structure can be distinguished based on an ion image obtained by analyzing a particle cross-section using a Focused Ion Beam (FIB). For example, if a particle has the single crystal structure, a single crystal may be observed in the FIB analysis image based on differences in crystal orientation.

In example embodiments, in a cross-sectional image crystal orientation analysis of the lithium metal oxide particle obtained using the FIB, an average value of particle diameters based on a major axis may be 1 µm or more. For example, in the cross-sectional image crystal orientation analysis of 10 or more of the lithium metal oxide particles obtained using the FIB, the average value of the particle diameters based on the major axis may be in a range from 1 µm to 5 µm.

In example embodiments, the lithium metal oxide particle may include a cobalt concentration gradient. The content of cobalt may increase in a direction from a center of the particle to a surface in at least a portion of a region between the center and the surface of the lithium metal oxide particle.

The term "center of a particle " may refer to a spherical center of the particle if the particle is spherical, or a center of mass of the particle if the particle does not have a specific shape.

In example embodiments, a cobalt content at the surface of the lithium metal oxide particle may be higher than that at the center of the lithium metal oxide particle. Accordingly, transfer of lithium ions may be facilitated into the particle at the surface of the particle where the cobalt content is relatively high. In the center of the particle where the cobalt content is relatively low, a nickel content may be increased, and thus the capacity of the cathode may be increased through the particle center. Thus, high-power properties of the high-capacity cathode may be achieved through the particle center.

In the lithium metal oxide particle, a continuous cobalt concentration gradient may be present in at least a portion of the region between the center and the surface of the particle, e.g., in a concentration gradient region. The continuous concentration gradient may refer to a concentration distribution that varies in a consistent trend from the center of the particle toward the surface of the particle.

The consistent trend refers to a decrease or an increase in an overall concentration change trend, and is not intended to exclude a trend which may include an outlier point or an inflection point opposing the trend at a certain point.

In example embodiments, the lithium metal oxide particle may include a core region including the particle center, and a concentration gradient region located between the core region and the particle surface where the cobalt content increases in a direction from the surface of the core region to the particle surface. The concentration gradient region may be located on an outer surface of the core region, and may be at least a portion or a partial portion of a region extending from the outer surface of the core region to the particle surface (e.g., an outermost surface).

In an embodiment, the concentration gradient region may encompass a region extending from an outer surface of the core region to the particle surface.

In example embodiments, the cobalt content within the core region may not have a gradient in a direction from the particle center to the surface. For example, the cobalt content within the core region may be substantially constant. The term "substantially constant content" does not exclude a local concentration variation and a minor concentration variation due to a variation in synthesis process conditions.

For example, a difference between maximum and minimum cobalt contents measured at any point within the core region may be 1 mol% or less.

In example embodiments, the cobalt content among elements excluding lithium and oxygen of the lithium metal oxide at the particle surface may be in a range from 10 mol% to 25 mol%. In some embodiments, the cobalt content among elements excluding lithium and oxygen of the lithium metal oxide at the particle surface may be in a range from 12 mol% to 23 mol%, or from 13 mol% to 21 mol%.

The term "content at a particle surface" used herein may refer to a content within a region extending from the outermost surface of the lithium metal oxide particle to a depth of about 0.2% to 0.4% of a particle radius in a radial direction of the particle.

Within this range, the cobalt concentration gradient in the lithium metal oxide particle may be appropriately controlled, thereby improving a crystal structure stability of the particle.

In example embodiments, a diameter of the core region may be in a range from 0.5 µm to 4 µm. In some embodiments, the diameter of the core region may be in a range from 1 µm to 3.5 µm.

In example embodiments, the diameter of the core region may be measured in a cross-section including the center of the particle.

In example embodiments, an average particle diameter of the core region may be 50% to 90% of an average particle diameter of the lithium metal oxide particle. In some embodiments, the average particle diameter of the core region may be 61% to 87% of the average particle diameter of the lithium metal oxide particle.

In example embodiments, a thickness of the concentration gradient region may be 10% to 50% of the particle radius. In some embodiments, the thickness of the concentration gradient region may be 10% to 40%, or 13% to 29% of the particle radius.

In the above range, the power properties of the battery may be improved, and increase ratio in resistance during high-temperature cycle may be reduced. Accordingly, the life-span properties of the battery may also be improved.

In example embodiments, the nickel content within the concentration gradient region may decrease in a direction from the particle center to the particle surface. Accordingly, the crystal structure stability of the particle surface may be further improved.

In example embodiments, the nickel content among elements excluding lithium and oxygen of the lithium metal oxide at the particle surface may be in a range from 50 mol% to 85 mol%. In some embodiments, the nickel content among elements excluding lithium and oxygen of the lithium metal oxide at the particle surface may be in a range from 50 mol% to 75 mol%.

In the above range, the high-capacity cathode may be implemented while obtaining the crystal structure stability at the surface of the lithium metal oxide particle.

In example embodiments, a distribution of elemental contents including metals in the lithium metal oxide particle may be analyzed using an inductively coupled plasma (ICP).

For example, the lithium metal oxide particles may be dissolved in an acid solution, and the content of metal elements from the surface of the lithium metal oxide particle to a certain depth may be analyzed by an inductively coupled plasma analysis of the dissolved solution.

For example, the acid solution may include an acid compound such as sulfuric acid, hydrochloric acid or nitric acid. For example, a content of the acid compound based on a total weight of the acid solution may be in a range from 1 wt% to 10 wt%, or from 2 wt% to 5 wt%.

As an immersion time of the lithium metal oxide particles in the acid solution increases, an amount of the dissolved metal elements may increase. Accordingly, a concentration distribution of the metal elements from the lithium metal oxide particles may be analyzed by adjusting the immersion time of the lithium metal oxide particles in the acid solution.

For example, the lithium metal oxide particles may be immersed in the acid solution for a certain period, and then remaining particles may be filtered to measure a change in particle size. A concentration of the metal element in the dissolved region of the lithium metal oxide particle may be measured by measuring a content of the metal element in an aqueous solution in which the lithium metal oxide particles are dissolved using the inductively coupled plasma.

In example embodiments, an average particle diameter of the lithium metal oxide particles may be in a range from 1 µm to 5 µm. In some embodiments, the average particle diameter of the lithium metal oxide particles may be in a range from 1.5 µm to 4.5 µm.

The method for preparing the lithium metal oxide is not particularly limited.

For example, a metal hydroxide precursor having the average composition and/or the average particle diameter of the core region may be immersed in a metal precursor aqueous solution. A metal hydroxide precursor may be grown while varying contents of metal precursors such as a nickel precursor and a cobalt precursor.

The metal hydroxide precursor may be mixed with a lithium source and calcined to prepare the lithium metal oxide. For example, the calcination may be performed at a temperature in a range from 800 °C to 1000 °C.

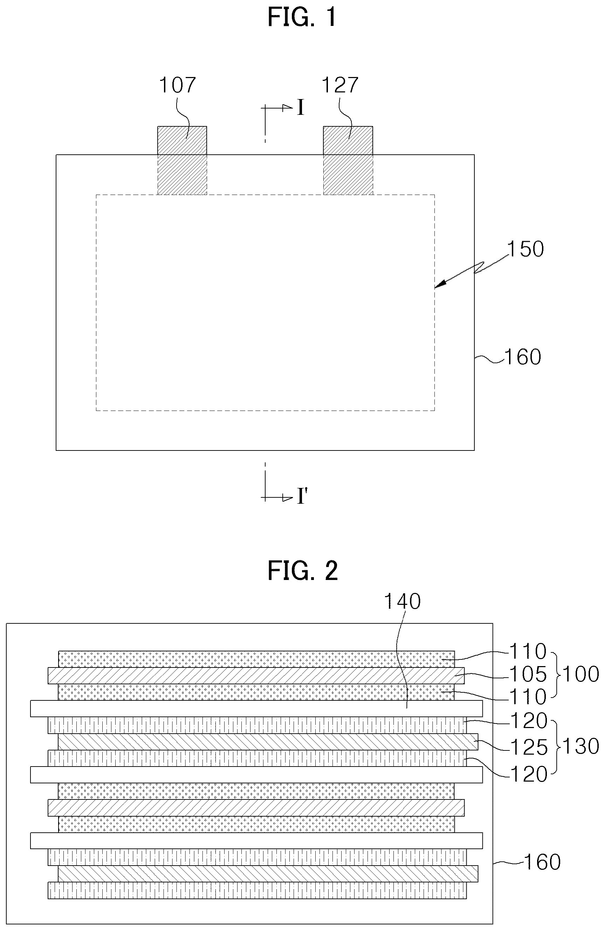

As illustrated in FIG. 2, the cathode for a secondary battery according to embodiments includes a cathode current collector 105 and a cathode active material layer 110 disposed on a surface of the cathode current collector 105.

The cathode current collector 105 may include, e.g., stainless steel, nickel, aluminum, titanium, copper, or an alloy thereof, and may include, e.g., aluminum or an aluminum alloy.

The cathode active material layer 110 may be disposed on one surface or both surfaces of the cathode current collector 105, and may include the above-described cathode active material for a secondary battery.

The cathode active material for a secondary battery may be mixed and stirred with a binder, a conductive material, and/or a dispersive agent in a solvent to prepare a slurry. The slurry may be coated on the cathode current collector, and then dried and pressed to prepare the cathode.

The binder may include, e.g., an organic binder such as vinylidene fluoride-hexafluoropropylene copolymer (PVDF-co-HFP), polyvinylidene fluoride (PVDF), polyacrylonitrile, polymethylmethacrylate, etc., or an aqueous binder such as styrene-butadiene rubber (SBR) that may be used together with a thickener such as carboxymethyl cellulose (CMC).

For example, a PVDF-based binder may be used as the cathode binder. In this case, an amount of the binder for forming the cathode active material layer may be reduced and an amount of the cathode active material may be relatively increased. Thus, the power and capacity of the secondary battery may be enhanced.

The conductive material may be included to promote electron transfer between active material particles. For example, the conductive material may include a carbon-based conductive material such as graphite, carbon black, graphene, carbon nanotube, etc., and/or a metal-based conductive material including tin, tin oxide, titanium oxide, a perovskite material such as LaSrCoO₃, LaSrMnO₃, or the like.

The solvent may include, e.g., N-methyl-2-pyrrolidone (NMP), dimethylformamide, dimethylacetamide, N-dimethylaminopropylamine, ethylene oxide, tetrahydrofuran, or the like.

A lithium secondary battery according to embodiments includes the above-described cathode and an anode opposing the cathode. The lithium secondary battery may further include a separator interposed between the cathode and the anode, and an electrolyte solution.

Hereinafter, a lithium secondary battery according to embodiments will be described in more detail with reference to the drawings. FIGS. 1 and 2 are a schematic plan view and a cross-sectional view, respectively, illustrating a lithium secondary battery according to embodiments. For example, FIG. 2 is a cross-sectional view taken along a line I-I' of FIG. 1.

Referring to FIGS. 1 and 2, a lithium secondary battery may include an electrode assembly including a cathode 100, an anode 130, and a separator 140 interposed between the cathode and the anode. The electrode assembly may be accommodated together with an electrolyte solution in a case 160 to be impregnated with the electrolyte solution.

As described above, the cathode 100 includes the cathode current collector 105 and the cathode active material layer 110, and the cathode active material layer 110 includes the above-described cathode active material for a secondary battery.

The anode 130 may include an anode current collector 125 and an anode active material layer 120 formed by coating an anode active material on the anode current collector 125. An anode binder and a conductive material may be optionally included .

For example, an anode active material capable of adsorbing and de-intercalating lithium ions may be used without a particular limitation. For example, a carbon-based material such as a crystalline carbon, an amorphous carbon, a carbon composite, a carbon fibers, etc.; a lithium alloy; a silicon (Si)-based compound or tin, etc., may be used. Examples of the amorphous carbon include hard carbon, coke, a mesocarbon microbead (MCMB), a mesophase pitch-based carbon fiber (MPCF), or the like.

Examples of the crystalline carbon may include a graphite-based carbon such as natural graphite, artificial graphite, a graphitized coke, a graphitized MCMB, a graphitized MPCF, or the like. Elements included in the lithium alloy may include aluminum, zinc, bismuth, cadmium, antimony, silicon, lead, tin, gallium, indium, or the like.

The silicon-based compound may include, e.g., silicon, silicon oxide, or a silicon-carbon composite compound such as silicon carbide (SiC).

In some embodiments, a content of the silicon-based compound may be in a range from 1 wt% to 20 wt%, from 1 wt% to 15 wt%, or from 1 wt% to 10 wt% based on a total weight of the anode active material.

The anode active material may be mixed and stirred with a binder, a conductive material, and/or a dispersant in a solvent to prepare a slurry. The slurry may be coated on the anode current collector 125, and then dried and pressed to prepare the anode active material layer 120.

For example, the coating process may be performed by a method such as a gravure coating, a slot die coating, a multi-layer simultaneous die coating, an imprinting, a doctor blade coating, a dip coating, a bar coating, a casting, or the like, but is not limited thereto. The anode active material layer 120 may further include the binder, and may optionally further include the conductive material, a thickener, or the like.

Non-limiting examples of the solvent include water, pure water, deionized water, distilled water, ethanol, isopropanol, methanol, acetone, n-propanol, t-butanol, or the like.

The above-described materials that may be used in manufacturing the cathode may be used as the binder, the conductive material, and the thickener.

In some embodiments, a styrene-butadiene rubber (SBR)-based binder, carboxymethyl cellulose (CMC), a polyacrylic acid-based binder, a PEDOT (poly(3,4-ethylenedioxythiophene))-based binder, or the like, may be used as the anode binder.

The separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, or the like. The separator 140 may include a nonwoven fabric formed of glass fiber having a high melting point, polyethylene terephthalate fiber, or the like.

In some embodiments, an area (e.g., a contact area with the separator 140) and/or a volume of the anode 130 may be larger than that of the cathode 100. Accordingly, transfer of lithium ions generated from the cathode 100 to the anode 130 may be facilitated without, e.g., being deposited or precipitated.

In example embodiments, an electrode cell may be defined by the cathode 100, the anode 130 and the separator 140, and a plurality of the electrode cells may be stacked to form, e.g., the electrode assembly 150 in the form of a jelly roll. For example, the electrode assembly 150 may be formed by winding, stacking, folding, or the like, of the separator 140.

The electrode assembly 150 may be accommodated in the case 160 together with an electrolyte solution to define a lithium secondary battery. In example embodiments, a non-aqueous electrolyte solution may be used as the electrolyte solution.

The non-aqueous electrolyte solution may include a lithium salt as an electrolyte and an organic solvent. For example, the lithium salt may be expressed as Li⁺X⁻, and Examples of an anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

As illustrated in FIG. 1, electrode tabs (a cathode tab and an anode tab) included in each electrode cell may protrude from the cathode current collector 105 and the anode current collector 125, respectively, to extend to one side of the case 160. The electrode tabs may be fused together with the one side of the case 160 to form an electrode lead (a cathode lead 107 and an anode lead 127) that may be extended or exposed to an outside of the case 160.

For example, the lithium secondary battery may be fabricated in a cylindrical type using a can, a prismatic type, a pouch type, or a coin type.

The lithium secondary battery may be driven at a voltage in a range of 2.5 V to 4.5 V. Accordingly, improved power properties may be provided from the high voltage driving.

The present disclosure includes aspects as follows, and may be implemented from at least one of the aspects.

Aspect 1: A cathode active material for a secondary battery comprising a lithium metal oxide particle which contains nickel and cobalt and has a single particle structure, wherein a content of cobalt increases in a direction from a particle center to a particle surface in at least a portion of a region between the particle center and the particle surface, and the content of cobalt is in a range from 3 mol% to 20 mol%, and a content of nickel is in a range from 60 mol% to 90 mol% among elements of the lithium metal oxide particle excluding lithium and oxygen.

Aspect 2: The cathode active material for a secondary battery of aspect 1, wherein the content of nickel among elements of the lithium metal oxide particle excluding lithium and oxygen is in a range from 60 mol% to 80 mol%.

Aspect 3: The cathode active material for a secondary battery of any one of aspects 1 and 2, wherein the content of cobalt among elements of the lithium metal oxide particle excluding lithium and oxygen at the particle surface is in a range from 10 mol% to 25 mol%.

Aspect 4: The cathode active material for a secondary battery of any one of aspects 1 to 3, wherein the lithium metal oxide particle comprises: a core region including the particle center; and a concentration gradient region located between a surface of the core region and the particle surface, wherein the content of cobalt increases in a direction from the surface of the core region to the particle surface in the concentration gradient region.

Aspect 5: The cathode active material for a secondary battery of aspect 4, wherein the content of cobalt in the core region does not have a gradient in the direction from the particle center to the particle surface.

Aspect 6: The cathode active material for a secondary battery of any one of aspects 4 and 5, wherein a thickness of the concentration gradient region is in a range from 10% to 50% of a particle radius.

Aspect 7: The cathode active material for a secondary battery of any one of aspects 4 to 6, wherein the content of nickel in the concentration gradient region decreases in the direction from the particle center to the particle surface.

Aspect 8: The cathode active material for a secondary battery of any one of aspects 4 to 7, wherein the content of nickel among elements of the lithium metal oxide particle excluding lithium and oxygen at the particle surface is in a range from 50 mol% to 85 mol%.

Aspect 9: The cathode active material for a secondary battery of any one of aspects 1 to 8, wherein an average particle diameter of the lithium metal oxide particle is in a range from 1 µm to 5 µm.

Aspect 10: The cathode active material for a secondary battery of any one of aspects 1 to 9, wherein an average value of particle diameters along a major axis is 1 µm or greater in a cross-sectional image crystal orientation analysis of the lithium metal oxide particle obtained by a focused ion beam (FIB).

Aspect 11: A cathode for a lithium secondary battery, comprising: a cathode current collector; and a cathode active material layer on a surface of the cathode current collector, the cathode active material layer comprising the cathode active material for a secondary battery of any one of aspects 1 to 10.

Aspect 12: A lithium secondary battery, comprising: the cathode for a secondary battery of aspect 11; and an anode opposing the cathode.

Aspect 13: The lithium secondary battery of aspect 12, wherein a driving voltage of the lithium secondary battery is in a range from 2.5 V to 4.5 V.

### Example 1

A lithium metal oxide particle (average particle diameter: 3.6 µm) which had a single particle structure and in which a bulk composition (an entire average composition) was LiNi_{0.6}Co_{0.1}Mn_{0.3}O₂ and a particle surface composition was LiNi_{0.54}Co_{0.20}Mn_{0.27}O₂, and a concentration gradient region was formed from an outer surface of a core region to a particle surface to have a concentration gradient of cobalt and nickel was used.

### Example 2

A lithium metal oxide particle (average particle diameter: 3.6 µm) which had a single particle structure and in which a bulk composition was LiNi_{0.6}Co_{0.1}Mn_{0.3}O₂ and a particle surface composition was LiNi_{0.55}Co_{0.18}Mn_{0.27}O₂, and a concentration gradient region was formed from an outer surface of a core region to a particle surface to have a concentration gradient of cobalt and nickel was used.

### Example 3

A lithium metal oxide particle (average particle diameter: 3.8 µm) which had a single particle structure and in which a bulk composition was LiNi_{0.6}Co_{0.1}Mn_{0.3}O₂ and a particle surface composition was LiNi_{0.59}Co_{0.16}Mn_{0.25}O₂, and a concentration gradient region was formed from an outer surface of a core region to a particle surface to have a concentration gradient of cobalt and nickel was used.

### Example 4

A lithium metal oxide particle (average particle diameter: 3.8 µm) which had a single particle structure and in which a bulk composition was LiNi_{0.6}Co_{0.1}Mn_{0.3}O₂ and a particle surface composition was LiNi_{0.54}Co_{0.18}Mn_{0.28}O₂, and a concentration gradient region was formed from an outer surface of a core region to a particle surface to have a concentration gradient of cobalt and nickel was used.

### Example 5

A lithium metal oxide particle (average particle diameter: 3.9 µm) which had a single particle structure and in which a bulk composition was LiNi_{0.63}Co_{0.09}Mn_{0.28}O₂ and a particle surface composition was LiNi_{0.59}Co_{0.13}Mn_{0.28}O₂, and a concentration gradient region was formed from an outer surface of a core region to a particle surface to have a concentration gradient of cobalt and nickel was used.

### Example 6

A lithium metal oxide particle (average particle diameter: 3.7 µm) which had a single particle structure and in which a bulk composition was LiNi_{0.80}Co_{0.10}Mn_{0.10}O₂ and a particle surface composition was LiNi_{0.72}Co_{0.15}Mn_{0.13}O₂, and a concentration gradient region was formed from an outer surface of a core region to a particle surface to have a concentration gradient of cobalt and nickel was used.

### Comparative Example 1

A lithium metal oxide particle (average particle size: 3.8 µm) having a single particle structure and a composition of LiNi_{0.6}Co_{0.1}Mn_{0.3}O₂ without a concentration gradient region was used.

### Comparative Example 2

A lithium metal oxide particle (average particle size: 4.1 µm) having a secondary particle structure and a composition of LiNi_{0.6}Co_{0.1}Mn_{0.3}O₂ without a concentration gradient region were used.

### Comparative Example 3

A lithium metal oxide particle (average particle diameter: 4.5 µm) which had a secondary particle structure and in which a bulk composition was LiNi_{0.6}Co_{0.1}Mn_{0.3}O₂ and a particle surface composition was LiNi_{0.54}Co_{0.16}Mn_{0.3}O₂, and a concentration gradient region was formed from an outer surface of a core region to a particle surface to have a concentration gradient of cobalt and nickel was used.

### Comparative Example 4

A lithium metal oxide particle (average particle diameter: 4.2 µm) which had a single particle structure and in which a bulk composition was LiNi_{0.6}Co_{0.25}Mn_{0.15}O₂ and a particle surface composition was LiNi_{0.5}Co_{0.3}Mn_{0.2}O₂, and a concentration gradient region was formed from an outer surface of a core region to a particle surface to have a concentration gradient of cobalt and nickel was used.

### Comparative Example 5

A lithium metal oxide particle (average particle diameter: 4.3 µm) which had a single particle structure and in which a bulk composition was LiNi_{0.95}Co_{0.03}Mn_{0.02}O₂ and a particle surface composition was LiNi_{0.88}Co_{0.10}Mn_{0.02}O₂, and a concentration gradient region was formed from an outer surface of a core region to a particle surface to have a concentration gradient of cobalt and nickel was used.

### Comparative Example 6

A lithium metal oxide particle (average particle size: 3.7 µm) having a single particle structure and a composition of LiNi_{0.8}Co_{0.1}Mn_{0.1}O₂ without a concentration gradient region was used.

### Measurement Example

### (1) Confirmation of concentration distribution in particle

1) 0.02 g of each cathode active material of Examples and Comparative Examples was added to 50 ml of a nitric acid aqueous solution (5 wt%), and the cathode active material were removed using a syringe filter at about 30 minutes (about 0.2% decrease in particle diameter), about 1 hour (about 0.4% decrease in particle diameter), about 2 hours (about 0.8% decrease in particle diameter), about 3 hours (about 1.2% decrease in particle diameter), about 4 hours (about 1.6% decrease in particle diameter), about 15 hours (about 14% decrease in particle diameter), about 30 hours (about 29% decrease in particle diameter), and about 72 hours (complete dissolution of particle). Thereafter, a Ni element content, a Co element content, and a Mn element content in the solution were measured using an inductively coupled plasma-optical emission spectroscopy (Optima 7300DV, PerkinElmer Co.).

Table 1 below shows the measured Ni, Co and Mn contents of the cathode active materials of Examples and Comparative Examples together with an particle etched ratio (a percentage of a reduced particle diameter relative to a particle diameter before the measurement).

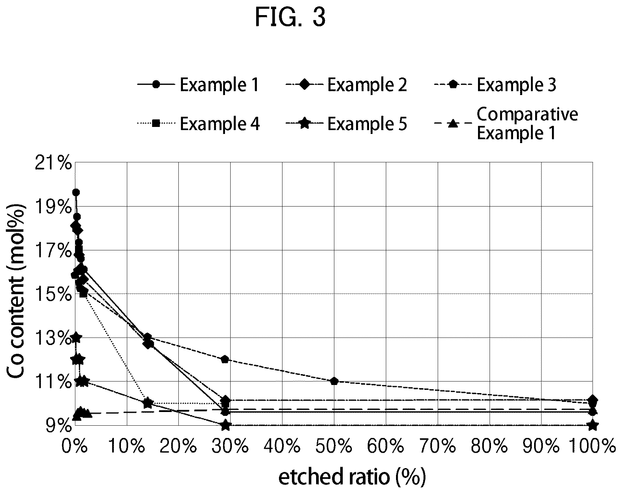

FIG. 3 is a graph of a cobalt content according to an etched ratio of lithium metal oxide particles of Examples and Comparative Examples.

2) A cross-sectional images of the lithium metal oxide particle of Example 1 was obtained using a focused ion beam (FIB). Further, a cobalt element distribution in the cross-section of the lithium metal oxide particle of Example 1 was confirmed using an energy dispersive spectroscopy (EDS) with respect to an image obtained using a transmission electron microscope (TEM).

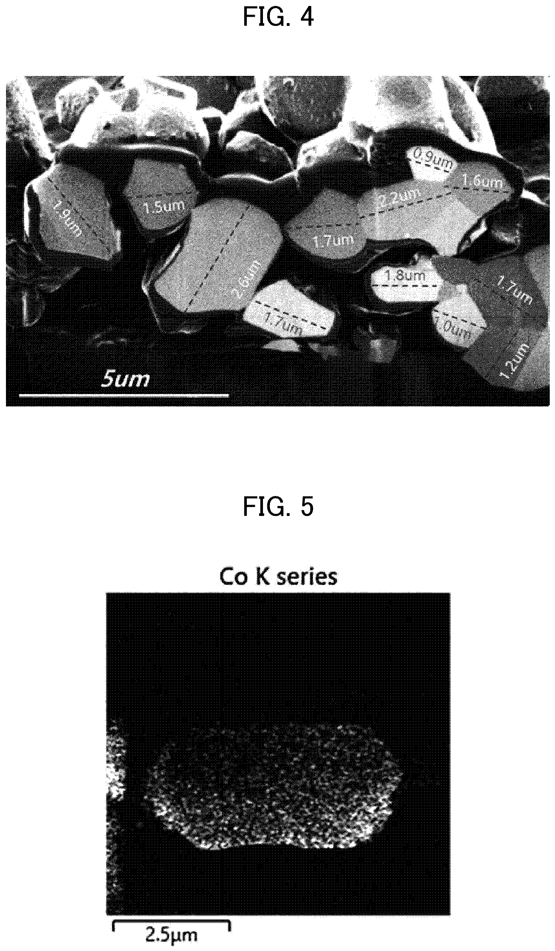

FIG. 4 is an FIB image of a cross-section of a lithium metal oxide particle of Example 1.

FIG. 5 is an EDS element mapping image of a cobalt element in a cross-section of a lithium metal oxide particle of Example 1.

**[Table 1]**

| etched ratio (percentage relative to particle diameter, %) | Ni:Co:Mn molar ratio | | | | | | | |
|---|---|---|---|---|---|---|---|---|
| | 0.2 | 0.4 | 0.8 | 1.2 | 1.6 | 14 | 29 | 100 |
| Example 1 | 54:20:27 | 56:19:26 | 57:17:26 | 57:17:26 | 57:16:26 | 57:16:26 | 60:10:30 | 60:10:30 |
| Example 2 | 55:18:27 | 56:18:26 | 59:16:25 | 59:15:26 | 59:15:26 | 60:13:27 | 60:10:30 | 60:10:30 |
| Example 3 | 59:16:25 | 59:16:25 | 59:16:25 | 59:15:26 | 59:15:26 | 59:13:28 | 59:12:29 | 60:10:30 |
| Example 4 | 54:18:28 | 55:18:27 | 55:17:28 | 56:16:28 | 58:15:27 | 60:10:30 | 60:10:30 | 60:10:30 |
| Example 5 | 59:13:28 | 59:12:29 | 60:12:28 | 60:11:29 | 61:11:28 | 62:10:28 | 63:09:28 | 63:09:28 |
| Example 6 | 72:15:13 | 74:14:12 | 77:12:11 | 79:12:09 | 79:11:10 | 80:10:10 | 80:10:10 | 80:10:10 |
| Comparative Example 1 | 60:10:30 | | | | | | | |
| Comparative Example 2 | 60:10:30 | | | | | | | |
| Comparative Example 3 | 54:16:30 | 55:15:30 | 55:14:31 | 56:13:31 | 58:11:31 | 60:10:30 | 60:10:30 | 60:10:30 |
| Comparative Example 4 | 50:30:20 | 52:29:19 | 54:28:18 | 56:27:17 | 59:26:15 | 60:25:15 | 60:25:15 | 60:25:15 |
| Comparative Example 5 | 88:10:02 | 88:08:04 | 91:06:03 | 93:05:02 | 94:04:02 | 95:03:02 | 95:03:02 | 95:03:02 |
| Comparative Example 6 | 80:10:10 | | | | | | | |

Referring to FIGS. 3 and 4, and Table 1, the lithium metal oxide particles of Examples had the single particle structure and included the concentration gradient region in which the cobalt content increased from a center to a surface.

Referring to FIG. 5, the lithium metal oxide particle of Example 1 included an aggregated structure of 10 or fewer single particles, and an average size of each single particle was about 1 µm.

### Experimental Example

Cathodes and lithium secondary batteries were manufactured by the methods as described below, and properties of batteries were evaluated using the methods (1) to (3) as described below. The results are shown in Table 2.

The batteries of Example 1 and Comparative Example 1 were further evaluated in the methods (1) to (3) by changing a charge voltage to 4.4 V or 4.5 V as indicated in Table 2 by Example 1_4.4 V, Example 1_4.5 V, Comparative Example 1_4.4 V, and Comparative Example 1_4.5 V.

### Manufacture of cathode and lithium secondary battery

Denka Black was used as a conductive material, PVDF was used as a binder, and the lithium metal oxide particles from Examples or Comparative Examples, the conductive material, and the binder were mixed in a mass ratio of 92:5:3 to form a cathode slurry. The cathode slurry was coated on an aluminum substrate, dried and pressed to obtain a cathode.

An anode slurry including 93 wt% of natural graphite as an anode active material, 5 wt% of KS6 (a flake-type conductive material), 1 wt% of styrene-butadiene rubber (SBR) as a binder, and 1 wt% of carboxymethyl cellulose (CMC) as a thickener was coated on a copper substrate, dried and pressed to obtain an anode.

The cathode and the anode were notched to an appropriate size and stacked. A separator (polyethylene, thickness: 25 µm) was interposed between the cathode and the anode to form a cell. Tab portions of the cathode and tab portions of the anode were welded. The welded cathode/separator/anode assembly was placed in a pouch and sealed at three sides including a side adjacent to electrode tabs.

An electrolyte solution was injected into a unsealed side, sealed, and an impregnation proceeded for at least 12 hours. Specifically, a 1 M LiPF₆ solution was prepared using a mixed solvent of ethylene carbonate (EC)/ethylmethyl carbonate (EMC)/dimethyl carbonate (DMC) (25/45/30; volume ratio), and 1 wt% of vinylene carbonate (VC) was added in advance, and 1,3-propane sultone (PS) and 1,3-propene sultone (PRS) were additionally added to prepare the electrolyte solution.

A pre-charge was performed for 36 minutes at a current of 0.25 C (2.5 A). Degassing was performed after 1 hour, and aging was performed for more than 24 hours, followed by a formation charge/discharge (charge condition: CC-CV 0.2 C 4.3 V 0.05 C CUT-OFF, discharge condition: CC 0.2 C 2.5 V CUT-OFF). Thereafter, a standard charge/discharge was performed (charge conditions: CC-CV 0.5 C, 4.3 V, 0.05 C cut-off; discharge conditions: CC 0.5 C, 2.5 V cut-off).

### (1) Discharge DCIR

A battery at an SOC (state of charge) 50% was charged and discharged at C-rates of 0.2 C, 0.5 C, 1.0 C, 1.5 C, 2.0 C, 2.5 C, and 3.0 C sequentially for 10 seconds. Voltage endpoints were used to derive a linear equation, and a slope of the equation was used as a DCIR.

### (2) Evaluation on high-temperature storage property

The battery was charged to an SOC 100% (CC-CV 1 C, 4.3 V, 0.1 C cut-off) and stored in a 60°C chamber for 12 weeks. After storing at room temperature for more than 12 hours, a recovery discharge capacity and a DCIR were measured under the same 1C conditions. After measuring the DCIR, gas generation within the battery was analyzed using a gas chromatography (GC).

A capacity retention was calculated as a percentage of a recovery discharge capacity divided by a discharge capacity before the storage, and a resistance increase ratio was calculated as a percentage of the DCIR divided by the DCIR in (1).

### (3) Evaluation on high-temperature life-span property

The battery was charged (CC-CV 1C, 4.3 V, 0.1C cut-off) and discharged (CC 1C, 2.5 V cut-off) 500 times in a 45°C chamber. A capacity retention was calculated as a percentage of a discharge capacity at the 500th cycle divided by a discharge capacity at the 1st cycle, and a resistance increase ratio was calculated as a percentage of the DCIR at the 500th cycle divided by the DCIR in (1).

**[Table 2]**

| | discharge DCIR (mQ) | 45°C life-span property | | 60°C storage property | | |
|---|---|---|---|---|---|---|
| | | capacity retention (%) | resistance increase ratio (%) | capacity retention (%) | resistance increase ratio (%) | gas generation (ml) |
| Example 1 | 4.02 | 98 | 130 | 96 | 113 | 27 |
| Example 2 | 3.98 | 98 | 121 | 97 | 119 | 21 |
| Example 1_4.4V | 4.13 | 94 | 143 | 92 | 121 | 35 |
| Example 1_4.5V | 4.26 | 91 | 150 | 90 | 128 | 44 |
| Example 3 | 3.99 | 97 | 131 | 93 | 124 | 25 |
| Example 4 | 4.00 | 96 | 135 | 91 | 126 | 29 |
| Example 5 | 3.89 | 98 | 126 | 92 | 125 | 24 |
| Example 6 | 3.93 | 92 | 125 | 85 | 129 | 40 |
| Comparative Example 1 | 4.13 | 95 | 141 | 90 | 131 | 35 |
| Comparative Example 2 | 3.87 | 95 | 110 | 87 | 107 | 49 |
| Comparative Example 3 | 4.13 | 95 | 141 | 90 | 131 | 35 |
| Comparative Example 4 | 4.26 | 97 | 132 | 91 | 130 | 44 |
| Comparative Example 5 | 3.87 | 95 | 110 | 87 | 107 | 49 |
| Comparative Example 6 | 4.26 | 85 | 138 | 80 | 140 | 64 |
| Comparative Example 1 4.4V | 4.5 | 93 | 120 | 98 | 125 | 48 |
| Comparative Example 1 4.5V | 4.03 | 90 | 125 | 89 | 138 | 75 |

Referring to Table 2, the batteries of Examples provided high capacity retentions, low resistance increase ratios, and improved cycle life-span properties even during repeated charge/discharge cycles at high temperature. Further, in the batteries of Examples, capacity degradation and resistance increase were suppressed, and gas generation was reduced even in the storage at the high temperature for the extended period.

In the batteries of Comparative Examples 1 and 6 including the cathode active materials devoid of the concentration gradient, the electrode resistance increased rapidly during repeated high-temperature charge/discharge cycles.

In the batteries of Comparative Examples 2 and 3 including the cathode active materials of the secondary particle structure, large amounts of gas were generated during the high-temperature storage, resulting in significant deterioration in the battery capacity or a rapid increase of the internal battery resistance.

In the battery of Comparative Example 4 including the cathode active material containing an excess of cobalt, the internal battery resistance increased by more than 130% during the high-temperature storage and the high-temperature charge/discharge.

In the battery of Comparative Example 5 including the cathode active material containing an excess of nickel, an amount of gas accumulation within the battery was increased during the high-temperature storage.

The battery of Example 1 provided improved high-temperature storage and high-temperature driving properties even when the charging voltage increased, compared to those from the battery of Comparative Example 1.

The above descriptions are intended to provide merely examples of the principles of the present disclosure, and other elements may be included without departing from the scope of the present disclosure.

## Claims

1. A cathode active material for a secondary battery comprising a lithium metal oxide particle which contains nickel and cobalt and has a single particle structure,
wherein a content of cobalt increases in a direction from a particle center to a particle surface in at least a portion of a region between the particle center and the particle surface, and
the content of cobalt is in a range from 3 mol% to 20 mol%, and a content of nickel is in a range from 60 mol% to 90 mol% among elements of the lithium metal oxide particle excluding lithium and oxygen.

2. The cathode active material for a secondary battery of claim 1, wherein the content of nickel among elements of the lithium metal oxide particle excluding lithium and oxygen is in a range from 60 mol% to 80 mol%.

3. The cathode active material for a secondary battery of any one of claims 1 and 2, wherein the content of cobalt among elements of the lithium metal oxide particle excluding lithium and oxygen at the particle surface is in a range from 10 mol% to 25 mol%.

4. The cathode active material for a secondary battery of any one of claims 1 to 3, wherein the lithium metal oxide particle comprises:
a core region including the particle center; and
a concentration gradient region located between a surface of the core region and the particle surface,
wherein the content of cobalt increases in a direction from the surface of the core region to the particle surface in the concentration gradient region.

5. The cathode active material for a secondary battery of claim 4, wherein the content of cobalt in the core region does not have a gradient in the direction from the particle center to the particle surface.

6. The cathode active material for a secondary battery of any one of claims 4 and 5, wherein a thickness of the concentration gradient region is in a range from 10% to 50% of a particle radius.

7. The cathode active material for a secondary battery of any one of claims 4 to 6, wherein the content of nickel in the concentration gradient region decreases in the direction from the particle center to the particle surface.

8. The cathode active material for a secondary battery of any one of claims 4 to 7, wherein the content of nickel among elements of the lithium metal oxide particle excluding lithium and oxygen at the particle surface is in a range from 50 mol% to 85 mol%.

9. The cathode active material for a secondary battery of any one of claims 1 to 8, wherein an average particle diameter of the lithium metal oxide particle is in a range from 1 µm to 5 µm.

10. The cathode active material for a secondary battery of any one of claims 1 to 9, wherein an average value of particle diameters along a major axis is 1 µm or greater in a cross-sectional image crystal orientation analysis of the lithium metal oxide particle obtained by a focused ion beam (FIB).

11. A cathode for a lithium secondary battery, comprising:
a cathode current collector; and
a cathode active material layer on a surface of the cathode current collector, the cathode active material layer comprising the cathode active material for a secondary battery of any one of claims 1 to 10.

12. A lithium secondary battery, comprising:
the cathode for a secondary battery of claim 11; and
an anode opposing the cathode.

13. The lithium secondary battery of claim 12, wherein a driving voltage of the lithium secondary battery is in a range from 2.5 V to 4.5 V.
